# EUROPEAN PATENT APPLICATION

(11) **EP 2 610 433 A1**
(43) Date of publication of application: **03.07.2013**
(21) Application number: 11817194.1
(22) Date of filing: 07.07.2011
(51) Int. Cl.: E21B 47/00, E21B 49/00, G01V 3/30

(54) **DOWNHOLE HIGH-POWER ELECTROMAGNETIC PULSE EMISSION APPARATUS**

(30) Priority: 17.02.2011 CN 201110039340
(71) Applicant: Yangtze University, Jingzhou, Hubei 434023 (CN)
(72) Inventor: HU, Wenbao, Jingzhou, Hubei 434023 (CN); WANG, Junmin, Jingzhou, Hubei 434023 (CN); LUO, Mingzhang, Jingzhou, Hubei 434023 (CN); ZHANG, Hui, Jingzhou, Hubei 434023 (CN); XU, Fei, Jingzhou, Hubei 434023 (CN); YANG, Xuhui, Jingzhou, Hubei 434023 (CN); WEI, Yong, Jingzhou, Hubei 434023 (CN); LEI, Ming, Jingzhou, Hubei 434023 (CN); DONG, Haobin, Jingzhou, Hubei 434023 (CN); YAN, Liangjun, Jingzhou, Hubei 434023 (CN); XIONG, Xiaodong, Jingzhou, Hubei 434023 (CN); HU, Jiahua, Jingzhou, Hubei 434023 (CN); YANG, Jupeng, Jingzhou, Hubei 434023 (CN); WANG, Linsong, Jingzhou, Hubei 434023 (CN); FU, Yongqian, Jingzhou, Hubei 434023 (CN)
(74) Representative: Zeuner Summerer Stütz
(86) International application number: PCT/CN2011/076962
(87) International publication number: WO 2012/109845

(57) **Abstract**

A downhole high power electromagnetic pulse transmitting device including a ground instrument and a downhole instrument. The ground instrument, with an industrial control computer as the core, includes a depth/magnetic mark/GPS signal recording module, a Manchester coding and decoding module, and a cable drive module, wherein the depth/magnetic mark recording and the Manchester coding and decoding modules communicate respectively through two serial ports with the industrial control computer, and the cable drive module communication for the downhole instrument through four cables by means of phantom power supply. The downhole instrument includes, in turn from front to rear, an AC voltage boosting module, a rectifier, an energy storage capacitor, a transmitting coil, and a data acquisition module, and further comprises a high-voltage discharge switch and a computer-manipulated controller. Power supply of the downhole instrument is provided by the ground instrument through cables.

## Description

### FIELD OF THE INVENTION

The invention relates to control technology and hardware of downhole geophysical measurement, and more particularly to a device to realize instantaneous large power pulsed magnetic field excitation in a cased hole and observe and measure changes of induced electromotive force using a borehole electromagnetic detection method to evaluate remaining oil distribution in oil reservoir development.

### BACKGROUND OF THE INVENTION

One way to achieve a good geological result for electrical prospecting method is to enhance power supply sources. At present, because of strong interference of industrial current in the wild, signal noise ratio (SNR) is tenths to hundredths of that in the 1950s, it is therefore necessary to increase source power from dozens to hundreds of times to suppress the strong interference.

When the SNR is very small, although curve smoothness can be improved by using a multiple averaging approach, noise level still occupies a large weight in response results, therefore anomaly is sometimes eliminated by averaging or sometimes false anomaly is produced by averaging. This has been described in the error theory.

30 years ago, both the former Soviet Union and the United States had used large-scale generator of 1000 amp and small wire frame and achieved a geological effect to a certain extent. However in that age, the increased power is proportional to the volume and weight increased to power supply equipment, for example, power generation equipment of 2000 amp needs two huge trucks to drag, which makes it extremely inconvenient for the prospecting work.

### SUMMARY OF THE INVENTION

It is thus an objective of the invention to provide a downhole high power electromagnetic pulse transmitting device, which can realize instantaneous large power pulsed magnetic field excitation in a cased hole and complete full-time data recording of downhole waveform transmission and signal reception so as to provide an observation system for a borehole electromagnetic detection method to evaluate remaining oil distribution in oil reservoir development.

The objective is achieved by using the following technical schemes.

In accordance with one embodiment of this invention, the downhole high power electromagnetic pulse transmitting device comprises a ground instrument and a downhole instrument, in which the ground instrument provides power supply and controls the downhole instrument through cables.

### 1) Ground instrument

The ground instrument, with an industrial control computer as the core, comprises a depth/magnetic mark/GPS signal recording module, a Manchester coding and decoding module, and a cable drive module, wherein the depth/magnetic mark recording and the Manchester coding and decoding modules communicate respectively through two serial ports with the industrial control computer, and the cable drive module provides power and communication for the downhole instrument through four cables by means of phantom power supply.

### 2) Downhole instrument

The downhole instrument comprises, in turn from front to rear, an AC voltage boosting module, a rectifier, an energy storage capacitor, a transmitting coil, and a data acquisition module, and further comprises a high-voltage discharge switch and a computer-manipulated controller, in which every part is arranged on a plug-in board and then inserted into a casing of the downhole instrument; power supply of the downhole instrument is provided by the ground instrument through cables.

In a class of this embodiment, a plurality of voltage boosting modules in parallel have been applied to charge electrolytic capacitors in series, and a computer has been applied to control the conduction angle of a thyristor so as to control current of the capacitors and amplitude of charging voltage.

In a class of this embodiment, the voltage booster module is an AC-DC conversion circuit and a frequency transformer of 50 Hz is adopted to boost voltage. The high voltage storage capacitor is an electrolytic capacitor and the controller is managed by the computer. The transmitting coil is a coaxial solenoid with high temperature resistant wire wound in sections having an iron core embedded.

In a class of this embodiment, the casing is of non-magnetic materials.

In a class of this embodiment, the voltage is an AC voltage of 220 V and frequency 50 Hz. Boosted voltage can be adjusted by increasing the number of modules, generally 2.0 kV-3.5 kV.

A large power pulse transmission source formed by the transmitting coil and high voltage discharge switch comprises:

Pulse waveform being a quasi-Gauss pulse;

Maximum instantaneous current of a pulse >100 A;

Maximum instantaneous power of a pulse >100 kW; and

Pulse width > 20 ms.

Startup of the data acquisition module and high-voltage discharge switch is synchronous with precision < 0.1 µs.

Advantages of the invention are summarized below:

A method used in the invention is to boost and rectify 220V AC voltage to charge the capacitor, whose power switch discharges to the transmitting coil. Since the capacitor has small internal resistance and large capacity, it can output an instantaneous high current with pulse of hundreds of amperes, which can easily provide a strong power excitation magnetic dipole source due to high energy ratio. Consequently people can understand conductivity changes of the steel casing and find out more oil and natural gas resources. There is no need to wash the well during the work and the probe radius is large. At the time when large instantaneous current is acquired, the average power consumption of the power supply is not so large. As most of the present downhole measuring instruments cannot break through the restriction of the steel casing, they cannot be used in steel-cased hole. But the device used in the invention is able to break through the restriction of the steel casing. Because the average power is small, measuring instrument cables can be connected without any changes so that it reduces the use cost.

This invention adopts special technology to install all of the power supply and measuring instruments inside a tube and explorers can carry out the prospecting work by controlling the instruments on the ground. Such device is more lightweight and also has the capability to save energy and produce extremely large instantaneous power. As to the response results of the high power electromagnetic pulse, electrical conductivity is used to describe the distribution around wells, explorers can clearly obtain the information relating to geologic structure. It is an effective observation system for explorers to use downhole electromagnetic detection method to evaluate remaining oil distribution in oil reservoir development. The device described in the invention can also be used in the following fields:
1. Middle and deep mineral prospecting;
2. Geothermal energy, coal, groundwater prospecting;
3. Petroleum, natural gas prospecting; and
4. Other technical fields such as engineering and geological disaster.

### BRIEF DESCRIPTION OF THE DRAWINGS

FIG. 1 is a working diagram of an instruments system according to one embodiment of the invention;

FIG. 2 is a working principle diagram of a downhole instruments according to one embodiment of the invention;

FIG. 3 is a quasi-Gauss pulse stimulus current waveform diagram according to one embodiment the invention;

FIG. 4 is a schematic circuit diagram of a boosting module according to one embodiment of the invention;

FIG. 5 is a schematic diagram of a downhole high-power electromagnetic pulse transmitting device according to one embodiment of the invention; and

FIG. 6 is a positive and negative voltage pulse waveform diagram according to one embodiment of the invention.

### DETAILED DESCRIPTION OF THE EMBODIMENTS

This invention is explained in further detail below with the aid of examples and attached drawings and the embodiments shall not be understood as a restriction of the invention.

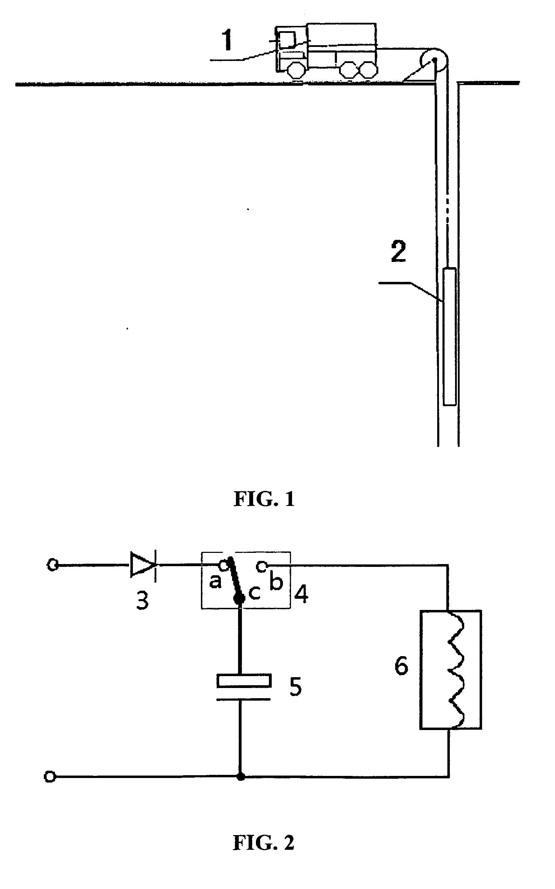

As shown in FIG. 1, the whole system comprises a ground instrument 1 and a downhole instrument 2. The ground instrument 1 provides power supply and controls the downhole instrument 2.

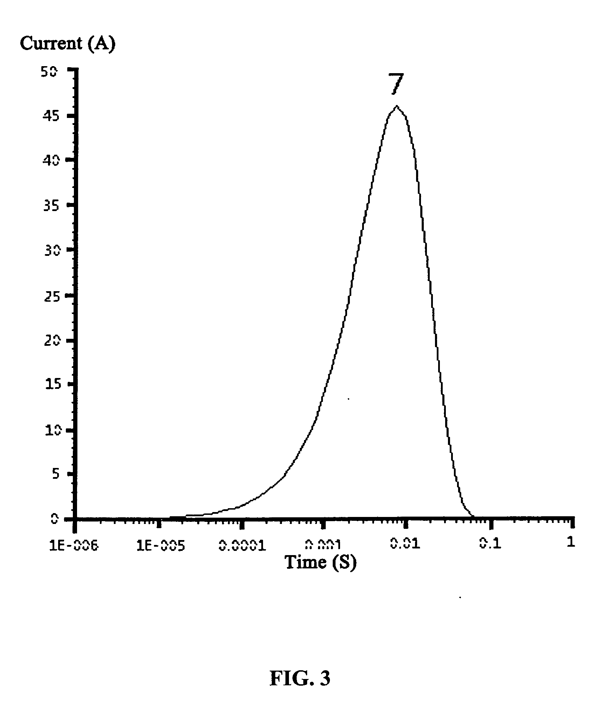

The downhole high-power electromagnetic pulse transmitting device in accordance with the invention is as shown in FIG. 2. The ground instrument 1 provides AC voltage to charge a capacitor 5 through a rectifier 3 and a switch 4. When charging is complete, the switch 4 disconnects the rectifier 3 and connects to a transmitting coil 6. Thereafter, electric energy (<100 ms) stored in the electrolytic capacitor 5 is released instantaneously, and a quasi-Gauss pulse waveform 7 is formed as shown in FIG. 3.

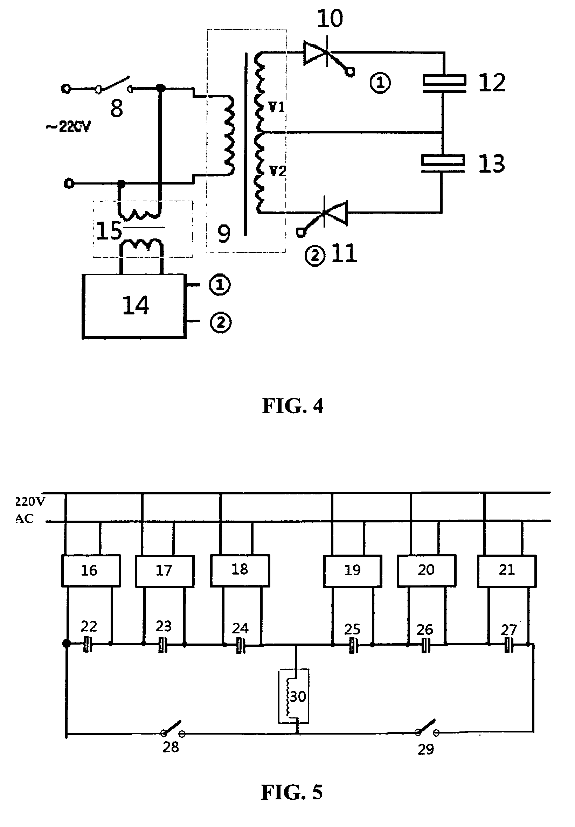

Working procedure of the boosting module is shown in FIG. 4:

When 220 V/50 Hz AC voltage passes through a switch 8 and a step-up transformer 9, the voltage will be boosted to 400 V x 2, i.e. *V*₁ = *V*₂=400 V. When a controller 14 ① is at a positive semicircle of the AC voltage, it can control the charging current of an electrolytic capacitor 12 from small to big by controlling the conduction angle of a thyristor 10 so as to keep the voltage at both sides of the capacitor rising gradually. Similarly, when it is in a negative semicircle of the AC current, the controller 14 ② will gradually increase the voltage to a capacitor 13 through the thyristor 10. When the charging voltage reaches a preset voltage, the controller 14 will automatically stop charging and the switch 8 will cut off the power supply circuit. A step-down transformer 15 provides power to the controller 14.

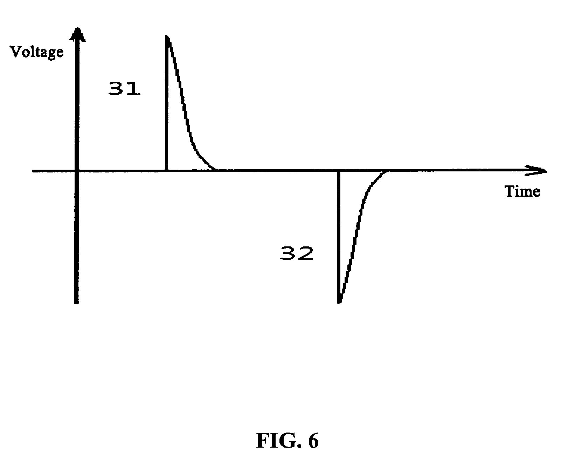

Working procedure of the transmitting device is shown in FIGS. 5 and 6:

Voltage boosting modules 16, 17, and18 start to work and respectively charge electrolytic capacitors 22, 23, and 24 gradually when boosting modules 19, 20, and 21 stop working. When a preset voltage is reached, a power switch 28 will turn on and discharge instantaneously (time < 100 ms) through a transmitting coil 30 to form a voltage waveform 31 as shown in FIG. 6. Thereafter, the boosting modules 19, 20, and 21 start to work and respectively charge electrolytic capacitors 25, 26, and 27. When a preset voltage is reached, a power switch 29 will turn on and form a voltage waveform 32 as shown in FIG. 6. The above-formed electromagnetic wave can penetrate through a steel casing.

When the power switches 28 and 29 as shown in FIG. 5 are working, the data acquisition will be triggered. To improve the SNR, the transmission at this point can be respectively done for 10-100 times.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

If the specification of this invention has some contents which are not described in detail, these contents shall be known to those technicians in this field and are not further mentioned herein.

## Claims

1. A downhole high power electromagnetic pulse transmitting device, comprising:
a) a ground instrument; and
b) a downhole instrument;
wherein
the ground instrument, with an industrial control computer as the core, comprises a depth/magnetic mark/GPS signal recording module, a Manchester coding and decoding module, and a cable drive module; the depth/magnetic mark recording and the Manchester coding and decoding modules communicate respectively through two serial ports with the industrial control computer, and the cable drive module communicates with the downhole instrument through cables by means of phantom power supply;
the downhole instrument comprises, in turn from front to rear, an AC voltage boosting module, a rectifier, an energy storage capacitor, a transmitting coil, and a data acquisition module, and further comprises a high-voltage discharge switch and a computer-manipulated controller, in which every part is arranged on a plug-in board and then inserted into a casing of the downhole instrument; power supply of the downhole instrument is provided by the ground instrument through the cables.

2. The device of claim 1, **characterized in that** a plurality of voltage boosting modules in parallel is connected to a plurality of electrolytic capacitors in series.

3. The device of claim 1, **characterized in that** the transmitting coil is a coaxial solenoid with high temperature resistant wire wound in sections having an iron core embedded.

4. The device of claim 1, **characterized in that** the casing is of non-magnetic materials.

5. The device of claim 1 or 3, **characterized in that** a power pulse transmission source formed by the transmitting coil and high voltage discharge switch comprises:
Pulse waveform being a quasi-Gauss pulse;
Maximum instantaneous current of a pulse >100 A;
Maximum instantaneous power of a pulse >100 kW; and
Pulse width >20 ms.

6. The device of claim 1, **characterized in that** startup of the data acquisition module and high-voltage discharge switch is synchronous with precision < 0.1 µs.
